# EUROPEAN PATENT APPLICATION

(11) **EP 4 233 530 A1**
(43) Date of publication of application: **30.08.2023**
(21) Application number: 23158371.7
(22) Date of filing: 23.02.2023
(51) Int. Cl.: A01K 5/02, A01K 39/01

(54) **FEEDING SYSTEM AS WELL AS CATTLE SHED EQUIPPED WITH THE FEEDING SYSTEM**

(30) Priority: 23.02.2022 NL 2031050
(71) Applicant: WEDA Holland B.V., 5466 AX Veghel (NL)
(72) Inventor: DONKERS, Richard, 5491 HA Sint-Oedenrode (NL)
(74) Representative: Verhees, Godefridus Josephus Maria

(57) **Abstract**

A feeding system for use in a cattle shed 19 has a feed silo 1 for dry feed, a tank 4 for wet feed, a mixing device 5 for mixing dry feed from the feed silo 1 with wet feed from the tank 4 into a feed mixture, a feed track 20 through which the feed mixture is transported and from which the cattle can eat, and transport means present in the feed track 20 for transporting the feed mixture through the feed track 20. The mixing device 5 is present at a distance from the feed track 20 and the feeding system has further transport means 18 for transporting the feed mixture from the mixing device 5 to the feed track 20. The mixing device 5 is preferably present outside the cattle shed 19. Furthermore, the feeding system preferably has a buffer vessel 17 in which the feed mixture is temporarily stored before it is introduced into the feed track 20 in order to allow the wet feed to soak into the dry feed.

## Description

### Field of the invention

The invention relates to a feeding system for use in a cattle shed, comprising:
- a feed silo for dry feed,
- a tank for wet feed,
- a mixing device for mixing dry feed from the feed silo with wet feed from the tank to form a feed mixture,
- a feed track through which the feed mixture is transported and which the cattle can eat from, the mixing device being present at a distance from the feed track,
- transport means present in the feed track for transporting the feed mixture through the feed track, and
- further transport means for transporting the feed mixture from the mixing device to the feed track.

### State of the art

Such a feeding system is known from EP2353377A. The mixing device of this known feeding system is formed by a vessel with an agitator present therein. The further transport means of this known feeding system are formed by a conveyor belt.

### Summary of the invention

An object of the invention is to provide a feeding system of the type described in the preamble in which a more efficient and better mixing of dry feed and wet feed takes place. To this end, the feeding system according to the invention is characterized in that the mixing device comprises an inclined mixing tube with a closed tube wall in which a helical mixing element is present, which is provided with an open core over its entire length. By setting up the mixing tube in which mixing takes place at an angle, preferably at an angle between 5 and 45 degrees, and by using a coreless screw-shaped mixing element, a good mixing of the dry feed with the wet feed takes place. Furthermore, the wet feed is in contact with the dry feed for a longer period of time, as a result of which the moisture absorbs better into the dry feed and the feed mixture is therefore less sticky and can be transported more easily through the feed track.

Preferably, there is a clearance of less than 8 mm between the outer edge of the helical mixing element and the inside of the wall of the mixing tube. As a result, only little or no feed mixture will stick to the inner wall of the mixing tube and the mixing tube will remain relatively clean, which is favorable for hygiene.

The mixing tube is provided with a wet feed inlet opening, which is preferably located near the lower end of the mixing tube. The outlet opening for the feed mixture is located in or near the upper end of the mixing tube. By arranging the wet feed inlet opening near the lower end of the feed, a longer and better mixing of the dry feed with wet feed is obtained.

To ensure that there will be good contact between the wet feed and the dry feed right from the start, the mixing device is preferably provided with at least one injector with which the wet feed is sprayed into the mixing tube with an overpressure of at least 0.5 bar. Furthermore, the injector is preferably provided for this purpose with a nozzle with a diameter of at most 4 mm.

An embodiment of the feeding system according to the invention is characterized in that the feeding system furthermore comprises a buffer vessel in which the feed mixture is temporarily stored before it is introduced into the feed track in order to allow the wet feed to soak into the dry feed. By storing the dry feed mixed with wet feed for a sufficient period of time before introducing it into the feed lane, the moisture absorbs better into the dry feed, so that there is no longer any question of a sticky mass and the sticking of the feed mix to the wall of the feed lane and/or to the means of transport. The length of time that the feed mixture is stored in the buffer vessel must be sufficient to allow the wet feed to be sufficiently absorbed into the dry feed so that it can be transported through the feed track with little power.

The invention also relates to a cattle shed provided with a feeding system described above, wherein the mixing device is present outside the cattle shed.

### Brief description of the drawings

The invention will be explained in more detail below on the basis of an exemplary embodiment of the feeding system according to the invention shown in the drawings. In the drawings:
Figure 1 is a schematic representation of an embodiment of the feeding system according to the invention; and
Figure 2 shows the mixing device of the feeding system shown in figure 1 .

### Detailed description of the drawings

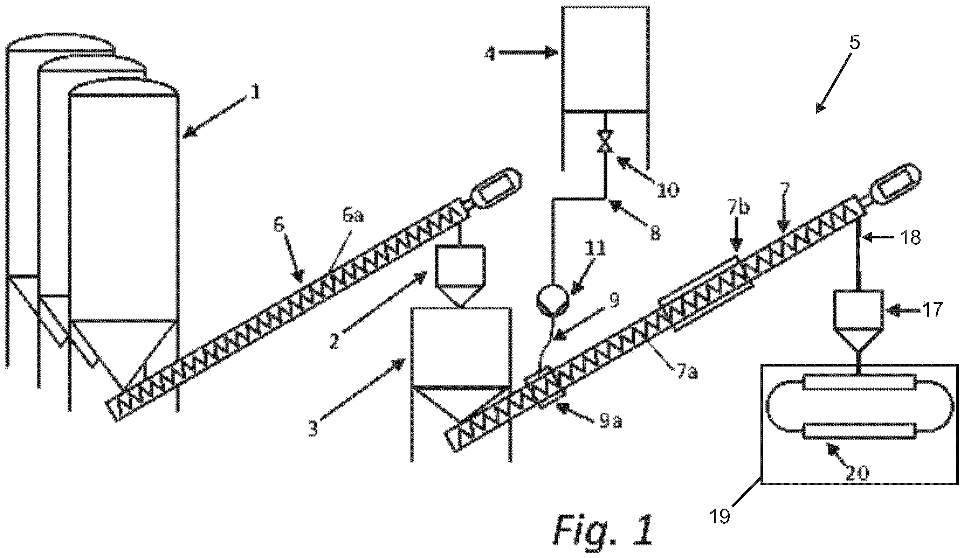

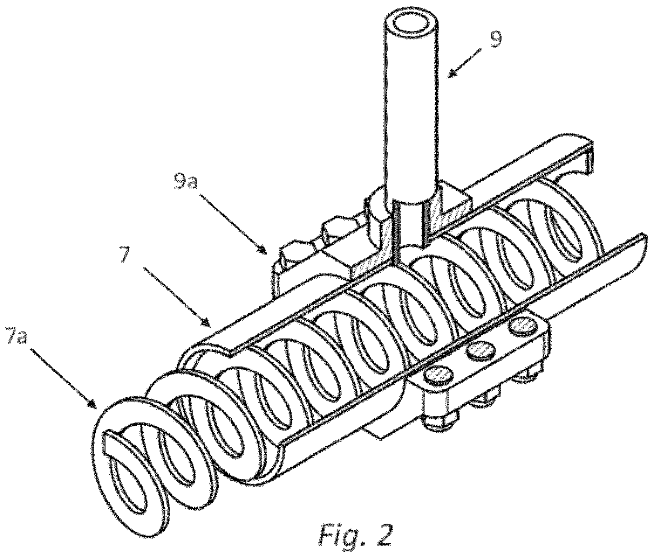

Figure 1 shows schematically an embodiment of the feeding system according to the invention. Feed track 20 is present in a cattle shed 19. A buffer vessel 17 contains a day's supply of a feed mixture of dry feed and wet feed. From this buffer vessel 17, feed mixture is introduced into the feed track a number of times a day. The feed track 20 can for instance be formed by a gutter with a semicircular cross-section. The feed introduced into the feed track 20 is fed by transporting means evenly distributed over the length of the feed track. These transporting means can for instance be an open helical spring rotating about the longitudinal axis, as can be seen in figure 2, or for instance a chain which is pulled through the feed track.

As soon as the buffer vessel 17 is empty at the end of a day, it is refilled with a freshly mixed mixture of dry feed and wet feed. Mixing takes place in a mixing device present outside the cattle shed 19. This mixing device 5 has a mixing tube 7 arranged at an angle. At the lower end of the mixing tube 7 dry feed is introduced into the mixing tube 7 from a hopper 3. The dry feed is transported upwards by a helical transport element 7a present in the mixing tube 7 and rotating about the longitudinal axis. At the top end of the mixing tube 7 there is an outlet opening that is connected to the buffer vessel 17. To check whether the mixing of wet feed and dry feed is proceeding properly, part of the wall of the mixing tube 7 is made transparent so that it can function as a viewing window 7b.

At a distance from the lower end of the mixing tube 7, wet feed is injected into the mixing tube 7. By mixing in a mixing tube 7, the environment is not polluted by splashes or dust. By already bringing the wet and dry feed together near the lower end of the mixing tube 7, the dry feed is given enough time during upward transport to absorb moisture from the wet feed, as a result of which the feed mixture becomes less or not sticky. The wet feed comes from a tank 4 for wet feed. A valve 10 and a pump 11 are located in an output conduit 8 connected to the tank 4. The pump is connected via a flexible hose 9 to an injector 9a opening into the mixing tube 7.

In figure 2 the mixing tube 7 is shown in cut-away form with the transport element 7a therein. The transport element 7a is provided with a channel present in the core and extending over the entire length. The injector 9a is provided with a nozzle with a diameter of 4 mm. The flexible hose 9 is connected to the injector. The pump 11 supplies the wet feed with an overpressure of at least 500 mbar, so that the wet feed is sprayed into the dry feed with a powerful jet. The dry feed consists of 60-95% dry matter, the wet feed consists of 0-35% dry matter. Between 0.5-50% wet feed is added to the dry feed in the mixing tube.

The clearance between the mixing element 7a and the inside of the mixing tube 7 is between 2-8 mm. Due to this small clearance, a good mixing takes place between wet feed and dry feed and the degree of caking of the feed mixture on the inside of the mixing tube 7 is reduced.

The hopper 3 is filled from feed silos 1 for dry feed. The dry feed is brought into a weighing device 2 via a conveyor tube 6 arranged at an angle, in which a conveyor auger 6a is rotatable, from where the dry feed falls into the hopper 3. By controlling both the valve position 10 and the speed of the pump 11 and by controlling the dosage of the hopper 3, the ratio between wet and dry feed can be adjusted.

Although the invention has been elucidated in the foregoing with reference to the drawings, it should be noted that the invention is by no means limited to the embodiment shown in the drawings. The invention also extends to all embodiments deviating from the embodiment shown in the drawings within the scope defined by the claims.

## Claims

1. Feeding system for use in a cattle shed (19), comprising:
- a feed silo (1) for dry feed,
- a tank (4) for wet feed,
- a mixing device (5) for mixing dry feed from the feed silo (1) with wet feed from the tank (4) to form a feed mixture,
- a feed track (20) through which the feed mixture is transported and the cattle can eat from it, the mixing device (5) being present at a distance from the feed track (20),
- transport means present in the feed track (20) for transporting the feed mixture through the feed track (20), and
- further transport means (18) for transporting the feed mixture from the mixing device (5) to the feed track (20),
**characterized in that** the mixing device (5) comprises an inclined mixing tube (7) with a closed tube wall in which a helical mixing element (7a) is present, which is provided with an open core over its entire length.

2. Feeding system according to claim 1, **characterized in that** there is a clearance of less than 8 mm between the outer edge of the helical mixing element (7a) and the inner side of the wall of the mixing tube (7).

3. Feeding system according to claim 1 or 2, **characterized in that** the mixing tube (7) is provided with a wet feed inlet opening located near the lower end of the mixing tube (7).

4. Feeding system according to any one of the preceding claims, **characterized in that** the mixing device (5) comprises at least one injector (9a) with which the wet feed is sprayed into the mixing tube (7) with an overpressure of at least 0.5 bar.

5. Feeding system according to claim 4, **characterized in that** the injector (9a) has a nozzle with a maximum diameter of 4 mm.

6. Feeding system according to any one of the preceding claims, **characterized in that** the feeding system furthermore comprises a buffer vessel (17) which is present between the mixing device (5) and the feed track (20) and in which the feed mixture is temporarily stored before it is introduced into the feed track (20) in order to allow the wet feed to soak into the dry feed

7. Cattle shed (19) provided with a feeding system according to any one of the preceding claims, wherein the mixing device (5) is present outside the cattle shed (19).
